# EUROPÄISCHE PATENTSCHRIFT

(11) **EP 1 168 784 B1**
(45) Veröffentlichungstag und Bekanntmachung des Hinweises auf die Patenterteilung: **25.05.2011**
(21) Anmeldenummer: 01113459.0
(22) Anmeldetag: 02.06.2001
(51) Int. Cl.: H04M 1/725, B60R 11/02

(54) **Externe Bedieneinheit für ein Mobilfunktelefon**
External operating unit for a cellular phone
Unité de commande externe pour un téléphone mobile

(30) Priorität: 21.06.2000 DE 10030603
(43) Veröffentlichungstag der Anmeldung: 02.01.2002
(73) Patentinhaber: SIEMENS AKTIENGESELLSCHAFT, 80333 München (DE)
(72) Erfinder: Kabatek, Ulrich, Dr., 64832 Babenhausen (DE)

(56) Entgegenhaltungen:
- EP-A- 0 996 267
- US-A- 5 479 479

## Beschreibung

Die Erfindung betrifft eine Bedieneinheit für ein Mobilfunktelefon, wobei die Bedieneinheit getrennt von dem Mobilfunktelefon ausgebildet und mit dem Mobilfunktelefon verbindbar ist. Weiterhin betrifft die Erfindung ein Verfahren zur
Aktualisierung von Befehlsfunktionen einer externen Bedieneinheit für den Betrieb eines Mobilfunktelefons.

Das Dokument EP-A-0 996 267 offenbart ein Kommunikationssytem, das eine klare Strukturierung aufweist, nämlich eine Strukturierung in Eingabe/Ausgabemittel, eine Schnittstelleneinrichtung und Anwendungsgeräte. Die Schnittstelleneinrichtung dient dabei zur Übertragung von (Eingabe- und Ausgabe-)Informationen zwischen den Eingabe/Ausgabemitteln und den Anwendungsgeräten. Die Schnittstelleneinrichtung umfasst eine Speichereinrichtung, in der Systemdaten abgespeichert sind, mit deren Hilfe die zu übertragenden (Eingabe- und Ausgabe-)Informationen in Abhängigkeit von den angeschlossenen Eingabe/Ausgabemitteln und Anwendungsgeräten verarbeitet werden.

Aus der nicht vorveröffentlichten Deutschen Patentanmeldung 99 21 533.2 der Anmelderin ist ein Kommunikationssystem eines Kraftfahrzeuges bekannt, das ein Mobilfunktelefon sowie ein in einem Kraftfahrzeug eingebautes Audio- und/oder Informationssystem beinhaltet. Das Mobilfunktelefon ist über die Bedieneinheit des Audio- und/oder Informationssystems bedienbar, sodass eine Freisprechfunktion realisierbar ist. Hierbei erfolgt eine Gesprächs- und/oder

Datenübertragung zwischen dem Mobilfunktelefon und dem Audio-und/oder
Informationssystem über eine drahtlose Verbindung.

Aus der Zeitschrift ADAC Motorwelt, Ausgabe März 1999 ist ein Telematik-Service-Kit bekannt, bei dem über ein Zusatzgerät, das mit einem Mobilfunktelefon verbindbar ist, über verschiedene Tasten eine Pannenhilfe angefordert, ein Notruf ausgesendet oder Verkehrsinformationen angefordert werden können. Dieses Zusatzgerät stellt somit ebenfalls eine externe Bedieneinheit für bestimmte Funktionen eines Mobilfunktelefons dar. Wie aus dieser Veröffentlichung zu entnehmen ist, kann das Zusatzgerät nur mit bestimmten Typen von Mobilfunktelefonen eingesetzt werden. Insbesondere tritt hierbei das Problem auf, dass ein Nutzer dieses Telematik-Service-Kit bei Anschaffung eines neuen Mobilfunktelefons die bereits vorhandene externe Bedieneinheit nicht weiterverwenden kann, da diese nur für den Betrieb mit festgelegten Typen von Mobilfunktelefonen ausgerüstet ist.

Inzwischen werden Mobilfunktelefone angeboten, über die ein Internetzugang möglich ist. Der Nutzer hat somit die Möglichkeit, unabhängig von einer Telefonfestnetzleitung die Angebote des Internets zu durchsuchen und Informationen aus dem Internet über das Mobilfunktelefon herunterzuladen. Der Zugang zum Internet erfolgt nach dem WAP-Standard (WAP: Wireless Application Protocol). Bei WAP handelt es sich um den gemeinsamen Standard der Kommunikationsindustrie zur Übertragung speziell aufbereiteter Internetseiten auf Mobilfunktelefone. Zukünftige Mobilfunkgerätegenerationen können zudem nach dem neuen UMTS-Standard arbeiten (UMTS: Universal Mobile Telecommunications System). Bei UMTS handelt es sich um einen Mobilfunkstandard, der eine Datenübertragung mit bis zu 200-facher Geschwindigkeit der herkömmlichen Netze ermöglicht.

Aus der vorstehenden Schilderung ist ersichtlich, dass die Weiterentwicklung von Mobilfunktelefonen auch in Zukunft in kurzen Abständen zu neuen Gerätegenerationen mit verändertem Funktionsumfang führen wird. Entsprechende moderne Mobilfunktelefone mit erweiterter Funktionalität können jedoch mit bestehenden externen Bedieneinheiten, wie sie insbesondere in Kraftfahrzeugen vorhanden sind, nicht kombiniert werden. Hier setzt nun die vorliegende Erfindung an, die es sich zur Aufgabe gemacht hat, ein Bediengerät anzugeben, das in einfacher Weise an die unterschiedliche Funktionalität verschiedeher Mobilfunktelefone anpassbar ist.

Die Aufgabe wird gelöst durch eine Bedieneinheit für ein Mobilfunktelefon, wobei die Bedieneinheit getrennt von dem Mobilfunktelefon ausgebildet und mit dem Mobilfunktelefon verbindbar ist, ein erster Satz von standardisierten Funktionen für Mobilfunktelefone, der die Funktionen zum Aufbau einer festen Datenverbindung und zur Übermittlung eines Identitätsmerkmales des Mobilfunktelefons beinhaltet, in einem Speichermodul der Bedieneinheit außerhalb des Mobilfunktelefons abgespeichert ist, eine Bibliothek mit einem zweiten Satz von spezialisierten Funktionen des Mobilfunktelefons in die Bedieneinheit ladbar und in dem Speichermodul der Bedieneinheit speicherbar ist.

Während bekannte Bedieneinheiten auf den Betrieb mit bestimmten Typen von Mobilfunktelefonen ausgelegt sind, wobei es sich naturgemäß bei den Mobilfunktelefonen nur um solche handeln kann, die zum Vertriebszeitpunkt der Bedieneinheit bereits auf dem Markt verfügbar waren, ist durch die erfindungsgemäße Bedieneinheit auch ein Betrieb mit zukünftigen Mobilfunktypen gewährleistet. In einem Speichermodul der Bedieneinheit ist ein erster Satz von standardisierten Funktionen für Mobilfunktelefone abgespeichert, der nur wenige Standardfunktionen umfasst. Hierzu gehören die Funktionen zum Aufbau einer festen Datenverbindung und zur Übermittlung eines Identitätsmerkmals des Mobilfunktelefons. Bei dem Identitätsmerkmal handelt es sich um ein Merkmal, das den Typ des angeschlossenen Mobilfunktelefons klar kennzeichnet. Dies kann beispielsweise die exakte Typenbezeichnung des Mobilfunktelefons oder auch eine Codenummer sein. Wird nun ein neues Mobilfunktelefon an die Bedieneinheit angeschlossen, wobei die spezialisierten Funktionen dieses neuen Mobilfunktelefons über die obengenannten Grundfunktionen hinausgehen, so wird eine Bibliothek mit einem zweiten Satz der spezialisierten Funktionen des Mobilfunktelefons in die Bedieneinheit geladen und in dem Speichermodul der Bedieneinheit abgespeichert. Anschließend ist das neue Mobilfunktelefon mit seiner vollen Funktionalität über die externe Bedieneinheit bedienbar.

Insbesondere weist die Bedieneinheit ein Steuermodul mit einem allgemein als Browser bezeichneten Programm zum Zugriff auf Dateien eines allgemein zugänglichen externen Computersystems, insbesondere des Internet, über eine Funkverbindung des Mobilfunktelefons auf. Über einen solchen Browser kann dabei in bekannter Weise auf Dateien des Internet zugegriffen werden, wobei die Verbindung zu einem Internetprovider über eine Funkverbindung des Mobilfunktelefons erfolgt. Hierdurch ergibt sich in besonders einfacher Weise die Möglichkeit den zweiten Satz von spezialisierten Funktionen von einer externen Datenbank und hierbei insbesondere über das Internet mittels der Funkverbindung zu laden. Entsprechende Informationen über die spezialisierten Funktionen können dabei von den Mobilfunkherstellern im Internet für die Kunden bereitgehalten werden, wie dies auch bereits heute für andere Anwendungsprogramme wie beispielsweise Druckertreiber der Fall ist.

Prinzipiell ist es möglich, in das Mobilfunktelefon nur die wesentlichen Module für die Datenübertragung zu integrieren, jedoch handelt es sich vorzugsweise bei dem Mobilfunktelefon um ein ohne die externe Bedieneinheit betreibbares Mobilfunktelefon. Hierzu ist in das Mobilfunktelefon eine weitere Anzeige- und Bedieneinheit integriert. Insofern handelt es sich um ein bekanntes, handelsübliches Mobilfunktelefon. Die erfindungsgemäße Bedieneinheit für ein Mobilfunktelefon kann insbesondere fest in einem Kraftfahrzeug installiert sein und dabei auch als Freisprecheinrichtung dienen.

Die Bedieneinheit kann insbesondere als eigenständiges Gerät im Kraftfahrzeug eingebaut sein, insbesondere in einem Anzeigeinstrument des Fahrzeugs oder im Armaturenbrett. Darüber hinaus kann die erfindungsgemäße Bedieneinheit auch in eine sonstige Komponente des Kraftfahrzeugs integriert sein. Hierbei kann es sich insbesondere um ein Autoradio, ein Navigations- oder ein Multimediasystem handeln. Hierbei können Bedien- und Anzeigeelemente dieser Komponenten für die erfindungsgemäße Bedieneinheit mitgenutzt werden, sodass sich ein Kostenvorteil ergibt.

Gemäß einer weiteren Ausgestaltung der Erfindung kann auch das Mobilfunktelefon fest in ein Kraftfahrzeug eingebaut sein, wobei die Bedieneinheit insbesondere eine mobile Bedieneinheit wie beispielsweise ein Notebook oder ein PDA (Personal Digital Assistant) sein kann.

Die Verbindung zwischen der Bedieneinheit und dem Mobilfunktelefon kann über eine drahtgebundene Verbindung erfolgen. Besonders bevorzugt wird jedoch eine drahtlose Verbindung zwischen der Bedieneinheit und dem Mobilfunktelefon, insbesondere eine drahtlose Kurzstreckenfunkverbindung wie sie in der eingangs erwähnten Deutschen Patentanmeldung 199 21 533.2 beschrieben ist, insbesondere nach dem Bluetooth-Standard. Bei dem in der Anzeigeeinheit vorzugsweise vorhanden Browser handelt es sich insbesondere um einen WAP-Browser. Hierdurch ist ein Internetzugang mittels der Bedieneinheit über den WAP-Standard möglich. Vorzugsweise verwendet der Browser die Protokolle bzw. Sprachen WML und WMLscript. Hierbei handelt es sich um standardisierte Protokolle bzw. Sprachen die analog zu den bei Internetfestnetzverbindungen vorhandenen Protokollen bzw. Sprachen HTML und Java-Script sind. Die Erfindung ist jedoch nicht auf die Verwendung eines WAP-Browsers beschränkt, sodass insbesondere auch zukünftige Standards eingesetzt werden können.

Bei den bereits erwähnten standardisierten Grundfunktionen, die fest in der Bedieneinheit abgespeichert sind, handelt es sich insbesondere um Funktionen, die Bestandteil des standardisierten AT+C Befehlssatzes sind.

Ein erfindungsgemäßes Verfahren zur Aktualisierung von Befehlsfunktionen einer externen Bedieneinheit für den Betrieb eines Mobilfunktelefons, wobei in einem der Bedieneinheit zugeordneten Speichermodul ein erster Satz von standardisierten Funktionen, der die Funktionen zum Aufbau einer festen Datenverbindung und zur Übermittlung eines Identitätsmerkmals des Mobilfunktelefons beinhaltet, abgespeichert ist, weist die folgenden Verfahrensschritte auf:
- Abfragen des Identitätsmerkmals des Mobilfunktelefons durch ein Steuermodul der Bedieneinheit,
- Feststellen anhand des Identitätsmerkmals, ob für das Mobilfunktelefon ein zweiter Satz von spezialisierten Funktionen des Mobilfunktelefons in der Bedieneinheit abgespeichert ist,
- falls für das Mobilfunktelefon kein zweiter Satz von spezialisierten Funktionen abgespeichert ist:
- automatisches Herstellen einer Funkverbindung mittels des Mobilfunktelefons zu einer externen Datenbank,
- Übermitteln des Identitätsmerkmals des Mobilfunktelefons an die externe Datenbank,
- Auswählen des zweiten Satzes von spezialisierten Funktionen für das Mobilfunktelefon aus der Datenbank,
- Übermitteln des zweiten Satzes von spezialisierten Funktionen an die Bedieneinheit,
- Abspeichern des zweiten Satzes von spezialisierten Funktionen in dem der Bedieneinheit zugeordneten Speichermodul außerhalb des Mobilfunktelefons.

Das Abspeichern des zweiten Satzes von spezialisierten Funktionen kann insbesondere dauerhaft sein. Alternativ kann der zweite Satz von spezialisierten Funktionen jedoch auch nur vorübergehend abgespeichert werden, sodass dieser oder Teile davon stets über die Mobilfunkverbindung aktuell geladen werden. Hierdurch ist eine regelmäßige Aktualisierung der spezialisierten Funktionen und damit des Funktionsumfangs des Mobilfunktelefons sichergestellt. Gegebenenfalls wird ein Verweis auf die stets aktuell zu ladenden Funktionen abgespeichert.

Die Erfindung wird nachfolgend anhand eines Ausführungsbeispiels und der Zeichnung näher erläutert. Es zeigen:
- Fig. 1:: ein Blockschaltbild der Bedieneinheit und des Mobilfunktelefons
- Fig. 2: ein Ablaufdiagramm

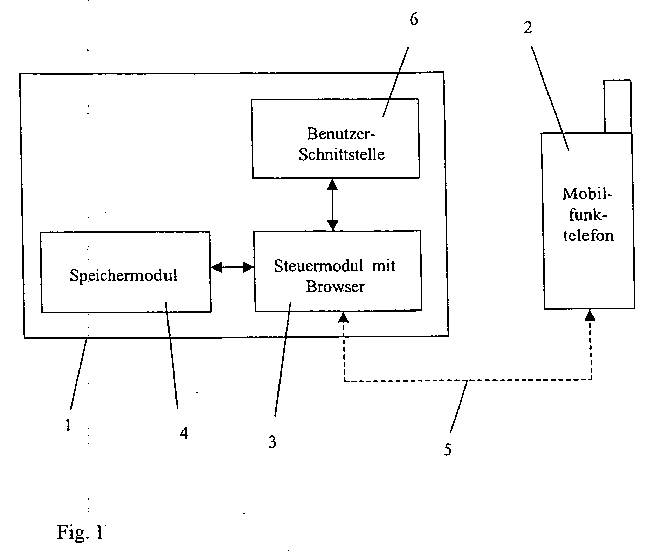

In Figur 1 ist ein Blockschaltbild der Bedieneinheit 1 dargestellt, die mit einem Mobilfunktelefon 2 verbunden ist. Die Bedieneinheit 1 beinhaltet ein Steuermodul 3 mit einem WAP-Browser. Der Browser verwendet in diesem Ausführungsbeispiel die Protokolle bzw. Sprachen WML und WMLskript. Der Browser ermöglicht mittels einer Mobilfunkverbindung über das Mobilfunktelefon 2 einen Zugang zum Internet und eine Datenübertragung vom und zum Internet. Hierzu wird in bekannter Weise eine Verbindung zur einem Internetprovider hergestellt.

Das Steuermodul 3 ist mit einem Speichermodul 4 verbunden. In dem Speichermodul 4 ist ein erster Satz von standardisierten Funktionen für Mobilfunktelefone abgelegt. Dieser erste Satz von standardisierten Funktionen ist Teil des sogenannten AT+C Befehlssatzes. Dieser Satz von standardisierten Funktionen enthält zumindest die Funktionen zum Aufbau einer festen Datenverbindung und zur Übermittlung eines Identitätsmerkmals des Mobilfunktelefons. Darüber hinaus sind in dem Speichermodul weitere spezialisierte Funktionen des Mobilfunktelefons 2 abgelegt. Über die Bedieneinheit 1 ist somit der volle Funktionsumfang des Mobilfunktelefons 2 nutzbar.

Das Steuermodul 3 ist ferner mit einer Benutzerschnittstelle 6 verbunden. Die Benutzerschnittstelle 6 beinhaltet eine Eingabeeinheit und eine Ausgabeeinheit. Bei der Eingabeeinheit kann es sich insbesondere um eine Tastatur handeln. Bei der Ausgabeeinheit handelt es sich insbesondere um eine optische Ausgabeeinheit. Die Eingabe- und Ausgabeeinheit können miteinander kombiniert sein, beispielsweise in Form eines berührungsempfindlichen Bildschirms (Touch-screen). Über die Benutzerschnittstelle 6 können somit in bekannter Weise Internetseiten unter Zuhilfenahme des Browsers im Steuermodul 3 und des Mobilfunktelefons 2 aufgerufen und Dateien aus dem Internet heruntergeladen werden.

Über die Verbindung 5 sind die Bedieneinheit 1 und das Mobilfunktelefon 2 miteinander verbunden. Bei der Verbindung 5 kann es sich sowohl um eine drahtgebundene als auch um eine drahtlose Verbindung handeln. Sofern es sich um eine drahtlose Verbindung handelt, wird insbesondere eine Kurzstreckenfunkverbindung zwischen der Bedieneinheit 1 und dem Mobilfunktelefon 2 bevorzugt, beispielsweise nach dem Bluetooth-Standard. In diesem Falle enthalten sowohl die Bedieneinheit 1 als auch das Mobilfunktelefon 2 entsprechende Sende- und Empfangseinrichtungen. Weiterhin kann die Verbindung zwischen der Bedieneinheit 1 und dem Mobilfunktelefon 2 auch durch eine optische Verbindung, insbesondere eine Infrarotverbindung, erfolgen. In diesem Falle sind entsprechende Infrarotsende- und -empfangsmodule in der Bedieneinheit 1 und im Mobilfunktelefon 2 vorzusehen. Die Bedieneinheit 1 kann insbesondere auch mehrere der genannten Verbindungsmöglichkeiten aufweisen, sodass sowohl eine drahtgebundene als auch eine drahtlose Verbindung zu entsprechenden Mobilfunktelefonen gewährleistet ist.

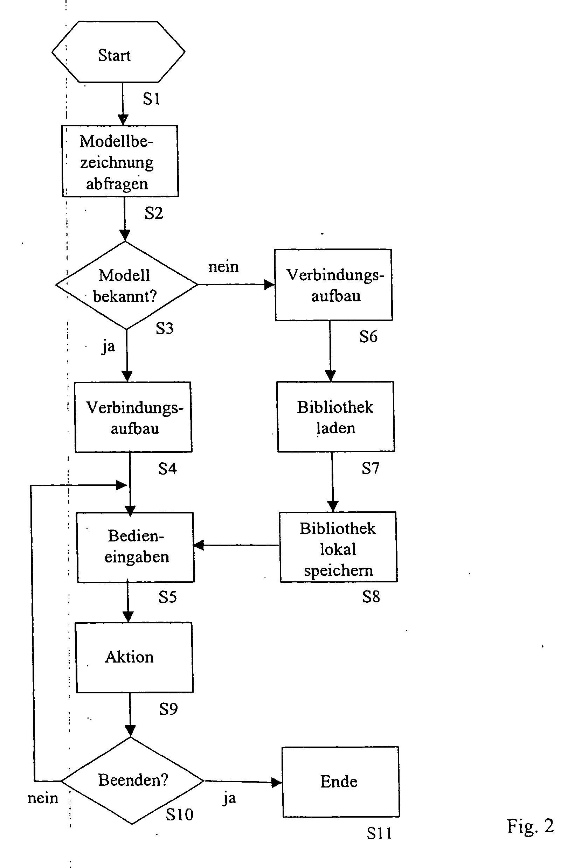

Wird nun ein neues Mobilfunktelefon mit der Bedieneinheit 1 verbunden, zu dem die spezialisierten Funktionen noch nicht in dem Speichermodul 4 der Bedieneinheit 1 abgespeichert sind, so werden die benötigten Bibliotheken mit einem zweiten Satz von spezialisierten Funktionen des Mobilfunktelefons aus dem Internet in das Speichermodul 4 geladen. Das hierbei ablaufenden Verfahren wird in seinen wesentlichen Schritten anhand der Figur 2 nachfolgend erläutert.

Nach dem Einschalten der Geräte in Schritt S1 wird in Schritt S2 zunächst die Modellbezeichnung des angeschlossenen Mobilfunkgerätes durch das Steuermodul 3 der Bedieneinheit 1 abgefragt. Hierbei kann es sich insbesondere um eine codierte Modellbezeichnung handeln. In Schritt S3 wird geprüft, ob es sich um ein bekanntes Modell handelt, d. h. ob im Speichermodul 4 eine Bibliothek mit spezialisierten Funktionen des angeschlossenen Mobilfunktelefons abgelegt ist. Ist dies der Fall, so kann in Schritt S4 direkt der Verbindungsaufbau erfolgen und in Schritt S5 können die Bedieneingaben durch den Benutzer vorgenommen werden. Die mit den Bedieneingaben verbundenen Aktionen werden in Schritt S9 ausgeführt. In Schritt S10 wird geprüft, ob die Verbindung beendet werden soll. Ist dies der Fall, so wird die Verbindung in Schritt S11 abgebrochen. Andernfalls können in Schritt S5 neue Bedieneingaben gemacht werden.

Ergibt sich dagegen in Schritt S3, dass zu dem Mobilfunktelefon keine Bibliothek von spezialisierten Funktionen im Speichermodul 4 abgelegt ist, so erfolgt in Schritt S6 zunächst ein Verbindungsaufbau des Mobilfunktelefons zu einem Internetprovider. Dieser Verbindungsaufbau ist möglich, da das Mobilfunktelefon zumindest einen ersten Satz von standardisierten Funktionen aufweist, der auch in dem Speichermodul 4 abgelegt ist. Bei diesen Funktionen handelt es sich um die Funktionen zum Aufbau einer festen Datenverbindung und zur Übermittlung eines Identitätsmerkmals des Mobilfunktelefons. Die letztgenannte Funktion wurde bereits in Schritt S2 zur Abfrage der Modellbezeichnung benötigt. Über die standardisierte Funktion zum Aufbau einer festen Datenverbindung erfolgt nunmehr in Schritt S6 der Zugang zu dem Internetprovider. In Schritt S7 wird schließlich eine Bibliothek mit einem zweiten Satz von spezialisierten Funktionen des Mobilfunktelefons vom Internet geladen. Der Schritt S7 umfasst mehrere Teilschritte, die insbesondere die Übermittlung des Identitätsmerkmals des Mobilfunktelefons, wie beispielsweise einer codierten Modellbezeichnung, an eine Internetdatenbank sowie einen Suchvorgang zum Aufsuchen der zu diesem Mobilfunktelefons gehörenden Bibliothek mit einem zweiten Satz von spezialisierten Funktionen des Mobilfunktelefons umfasst. Anschließend wird die ausgewählte Bibliothek an die Bedieneinheit 1 übermittelt. In Schritt S8 wird die so geladene Bibliothek in dem Speichermodul 4 der Bedieneinheit 1 abgespeichert. Das Speichermodul 4 enthält dazu entsprechende beschreibbare Speicherelemente. Anschließend können in Schritt S5 in bekannter Weise die üblichen Bedieneingaben gemacht werden. Nach diesem Prozess befinden sich die spezialisierten Funktionen dieses Mobilfunktelefons nunmehr in der Bedieneinheit 1, sodass der beschriebene Vorgang des Ladens der Bibliothek nur beim erstmaligen Anschließen eines neuen Mobilfunktyps an die Bedieneinheit 1 erforderlich ist.

Mit der erfindungsgemäßen Bedieneinheit bzw. dem erfindungsgemäßen Verfahren ist somit die Möglichkeit eröffnet, eine vorhandene Bedieneinheit, insbesondere eine in einem Fahrzeug angeordnete Bedieneinheit für Mobilfunktelefone, auch mit neu auf den Markt kommenden Mobilfunktelefonen mit neuen spezialisierten Funktionen zu nutzen.

## Patentansprüche

1. Bedieneinheit für ein Mobilfunktelefon, die
- getrennt von dem Mobilfunktelefon (2) ausgebildet und mit dem Mobilfunktelefon (2) verbindbar ist,
- ein Speichermodul (4) umfasst, in dem ein erster Satz von standardisierten Funktionen für Mobilfunktelefone, der die Funktionen zum Aufbau einer Verbindung und zur Übermittlung von Modell-Daten des Mobilfunktelefons (2) beinhaltet, abgespeichert ist,
- nach dem Einschalten die Modell-Daten des Mobilfunktelefons (2) abfrägt,
- anhand der Modell-Daten prüft, ob in dem Speichermodul (4) ein zweiter Satz von spezialisierten Funktionen des Mobilfunktelefons (2) abgespeichert ist,
- falls die genannte Prüfung ergibt, dass der genannte zweite Satz in dem Speichermodul (4) nicht abgespeichert ist, eine Funkverbindung mittels des Mobilfunktelefons (2) zu einer externen Datenbank aufbaut, anhand der genannten Modell-Daten den zweiten Satz von spezialisierten Funktionen des Mobilfunktelefons (2) von der externen Datenbank abruft und in das Speichermodul (4) ladet.

2. Bedieneinheit nach Anspruch 1, **dadurch gekennzeichnet, dass** in die Bedieneinheit (1) ein Steuermodul (3) mit einem Programm (Browser) zum Zugriff auf Dateien eines allgemein zugänglichen externen Computersystems, insbesondere des Internet, über eine Funkverbindung des Mobilfunktelefons (2) integriert ist.

3. Bedieneinheit nach Anspruch 1 oder 2, **dadurch gekennzeichnet, dass** der zweite Satz von spezialisierten Funktionen von einer externen Datenbank, insbesondere über das Internet, mittels der Funkverbindung ladbar ist.

4. Bedieneinheit nach einem der vorhergehenden Ansprüche, **dadurch gekennzeichnet, dass** in das Mobilfunktelefon (2) eine weitere Bedieneinheit integriert ist.

5. Bedieneinheit nach einem der vorhergehenden Ansprüche 2 bis 4, **dadurch gekennzeichnet, dass** der in der Bedieneinheit (1) vorhandene Browser als WAP-Browser ausgebildet ist.

6. Bedieneinheit nach Anspruch 5, **dadurch gekennzeichnet, dass** der Browser die Standards WML und/oder WMLscript verwendet.

7. Bedieneinheit nach einem der vorhergehenden Ansprüche, **dadurch gekennzeichnet, dass** die standardisierten Funktionen Bestandteil des standardisierten AT+C Befehlssatzes sind.

8. Bedieneinheit nach einem der vorhergehenden Ansprüche, **dadurch gekennzeichnet, dass** die Bedieneinheit (1) als eigenständiges Gerät in ein Anzeigeinstrument eines Fahrzeugs oder im Armaturenbrett eines Fahrzeugs eingebaut ist.

9. Bedieneinheit nach einem der vorhergehenden Ansprüche, **dadurch gekennzeichnet, dass** die Bedieneinheit (1) in ein Autoradio integriert ist.

10. Bedieneinheit nach einem der vorhergehenden Ansprüche, **dadurch gekennzeichnet, dass** die Bedieneinheit (1) in ein Navigations- oder ein Multimediasystem integriert ist.

11. Bedieneinheit nach einem der vorhergehenden Ansprüche, **dadurch gekennzeichnet, dass** die Bedieneinheit (1) mit dem Mobilfunktelefon (2) über eine drahtgebundene Verbindung verbindbar ist.

12. Bedieneinheit nach einem der vorhergehenden Ansprüche, **dadurch gekennzeichnet, dass** die Bedieneinheit (1) mit dem Mobilfunktelefon (2) über eine drahtlose Verbindung verbindbar ist.

13. Bedieneinheit nach Anspruch 12, **dadurch gekennzeichnet, dass** die Verbindung zwischen der Bedieneinheit (1) und dem Mobilfunktelefon (2) über eine Kurzstreckenfunkverbindung erfolgt.

14. Bedieneinheit nach Anspruch 13, **dadurch gekennzeichnet, dass** die Kurzstreckenfunkverbindung nach dem Bluetooth-Standard erfolgt.

15. Verfahren zur Aktualisierung von Befehlfunktionen einer externen Bedieneinheit für den Betrieb eines Mobilfunktelefons, wobei in einem der Bedieneinheit zugeordneten Speichermodul ein erster Satz von standardisierten Funktionen, der die Funktionen zum Aufbau einer festen Datenverbindung und zur Übermittlung eines Identitätsmerkmals des Mobilfunktelefons beinhaltet, abgespeichert ist, mit den Verfahrensschritten:
- Abfragen des Identitätsmerkmals des Mobilfunktelefons durch ein Steuermodul der Bedieneinheit,
- Feststellen anhand des Identitätsmerkmals, ob für das Mobilfunktelefon ein zweiter Satz von spezialisierten Funktionen des Mobilfunktelefons in der Bedieneinheit abgespeichert ist,
- falls für das Mobilfunktelefon kein zweiter Satz von spezialisierten Funktionen abgespeichert ist:
- automatisches Herstellen einer Funkverbindung mittels des Mobilfunktelefons zu einer externen Datenbank,
- Übermitteln des Identitätsmerkmals des Mobilfunktelefons an die externe Datenbank,
- Auswählen des zweiten Satzes von spezialisierten Funktionen für das Mobilfunktelefon aus der Datenbank,
- Übermitteln des zweiten Satzes von spezialisierten Funktionen an die Bedieneinheit,
- Abspeichern des zweiten Satzes von spezialisierten Funktionen in dem der Bedieneinheit zugeordneten Speichermodul außerhalb des Mobilfunktelefons.

16. Verfahren nach Anspruch 15, **dadurch gekennzeichnet, dass** der zweite Satz von spezialisierten Funktionen von der externen Datenbank über das Internet geladen wird.

17. Verfahren nach Anspruch 16, **dadurch gekennzeichnet, dass** die Verbindung zum Internet über ein in einem Steuermodul der Bedieneinheit lauf fähiges Programm (Browser) zum Zugriff auf Internet-Dateien erfolgt.

18. Verfahren nach Anspruch 17, **dadurch gekennzeichnet, dass** die Verbindung zum Internet über einen WAP-Browser erfolgt.

19. Verfahren nach Anspruch 18, **dadurch gekennzeichnet, dass** der Browser die Standards WML und WMLscript verwendet.

20. Verfahren nach einem der vorhergehenden Ansprüche, **dadurch gekennzeichnet, dass** die standardisierten Funktionen Bestandteil des AT+C Befehlssatzes sind.

21. Verfahren nach einem der vorhergehenden Ansprüche, **dadurch gekennzeichnet, dass** eine drahtgebundene Verbindung zwischen der Bedieneinheit und dem Mobilfunktelefon erfolgt.

22. Verfahren nach einem der vorhergehenden Ansprüche, **dadurch gekennzeichnet, dass** eine Kurzsteckenfunkverbindung zwischen der Bedieneinheit und dem Mobilfunktelefon, insbesondere nach dem Bluetooth-Standard, erfolgt.

## Claims

1. Operating unit for a mobile radio telephone, which
- is embodied separately from the mobile radio telephone (2) and can be connected to the mobile radio telephone (2),
- comprises a memory module (4) in which a first set of standardised functions for mobile radio telephones is stored, said first set containing the functions for setting up a connection and for transmitting model data of the mobile radio telephone (2),
- interrogates the model data of the mobile radio telephone (2) after switching on,
- checks, with the aid of the model data, whether a second set of specialised functions for the mobile radio telephone (2) is stored in the memory module (4),
- if said check reveals that said second set is not stored in the memory module (4), sets up a radio link to an external database by means of the mobile radio telephone (2), with the aid of said model data retrieves the second set of specialised functions of the mobile radio telephone (2) from the external database and loads it into the memory module (4).

2. Operating unit according to claim 1, **characterised in that** a control module (3) containing a program (browser) for accessing files of a generally accessible external computer system, in particular the internet, via a radio link of the mobile radio telephone (2) is integrated into the operating unit (1).

3. Operating unit according to claim 1 or 2, **characterised in that** the second set of specialised functions can be loaded from an external database, in particular via the internet, by means of the radio link.

4. Operating unit according to one of the preceding claims, **characterised in that** a further operating unit is integrated into the mobile radio telephone (2).

5. Operating unit according to one of the preceding claims 2 to 4, **characterised in that** the browser present in the operating unit (1) is embodied as a WAP browser.

6. Operating unit according to claim 5, **characterised in that** the browser uses the WML and/or WMLscript standards.

7. Operating unit according to one of the preceding claims, **characterised in that** the standardised functions are part of the standardised AT+C command set.

8. Operating unit according to one of the preceding claims, **characterised in that** the operating unit (1) is installed as an independent device into a display instrument of a vehicle or in the instrument panel of the vehicle.

9. Operating unit according to one of the preceding claims, **characterised in that** the operating unit (1) is integrated into a car radio.

10. Operating unit according to one of the preceding claims, **characterised in that** the operating unit (1) is integrated into a navigation system or multimedia system.

11. Operating unit according to one of the preceding claims, **characterised in that** the operating unit (1) can be connected to the mobile radio telephone (2) via a wired link.

12. Operating unit according to one of the preceding claims, **characterised in that** the operating unit (1) can be connected to the mobile radio telephone (2) via a wireless link.

13. Operating unit according to claim 12, **characterised in that** the connection between the operating unit (1) and the mobile radio telephone (2) is effected via a short-range radio link.

14. Operating unit according to claim 13, **characterised in that** the short-range radio link is effected according to the Bluetooth standard.

15. Method for updating command functions of an external operating unit for the operation of a mobile radio telephone, wherein a first set of standardised functions is stored in a memory module associated with the operating unit, said first set containing the functions for setting up a fixed data link and for transmitting an identity attribute of the mobile radio telephone, comprising the method steps of:
- interrogating the identity attribute of the mobile radio telephone by a control module of the operating unit,
- determining, based on the identity attribute, whether a second set of specialised functions for the mobile radio telephone is stored in the operating unit for the mobile radio telephone,
- if no second set of specialised functions is stored for the mobile radio telephone:
- automatically establishing a radio link to an external database by means of the mobile radio telephone,
- transmitting the identity attribute of the mobile radio telephone to the external database,
- selecting the second set of specialised functions for the mobile radio telephone from the database,
- transmitting the second set of specialised functions to the operating unit, and
- storing the second set of specialised functions outside the mobile radio telephone in the memory module associated with the operating unit.

16. Method according to claim 15, **characterised in that** the second set of specialised functions is loaded from the external database via the internet.

17. Method according to claim 16, **characterised in that** the connection to the internet is effected via a program (browser) for accessing internet files which is executable in a control module of the operating unit.

18. Method according to claim 17, **characterised in that** the connection to the internet is effected via a WAP browser.

19. Method according to claim 18, **characterised in that** the browser uses the WML and WMLscript standards.

20. Method according to one of the preceding claims, **characterised in that** the standardised functions are part of the AT+C command set.

21. Method according to one of the preceding claims, **characterised in that** a wired link is effected between the operating unit and the mobile radio telephone.

22. Method according to one of the preceding claims, **characterised in that** a short-range radio link is effected between the operating unit and the mobile radio telephone, in particular according to the Bluetooth standard.

## Revendications

1. Unité de commande pour un téléphone radio mobile, laquelle :
- est réalisée séparément du téléphone radio mobile (2) et peut être reliée au téléphone radio mobile (2) ;
- comprend un module de mémoire (4) dans lequel est stocké un premier jeu de fonctions standardisées pour téléphones radio mobiles, lequel jeu contient les fonctions servant à établir une liaison et à transmettre des données de modèles du téléphone radio mobile (2) ;
- interroge les données de modèles du téléphone radio mobile (2) après la mise en marche ;
- vérifie à l'aide des données de modèles si un deuxième jeu de fonctions spécialisées du téléphone radio mobile (2) est stocké dans le module de mémoire (4) ;
- établit au moyen du téléphone radio mobile (2), s'il ressort de ladite vérification que ledit deuxième jeu n'est pas stocké dans le module de mémoire (4), une liaison radio vers une base de données externe, extrait, au moyen desdites données de modèles, le deuxième jeu de fonctions spécialisées du téléphone radio mobile (2) à partir de la base de données externe et le charge dans le module de mémoire 4.

2. Unité de commande selon la revendication 1, **caractérisée en ce qu'**est intégré à l'unité de commande (1) un module de commande (3) avec un programme (browser) pour accéder à des données d'un système informatique externe généralement accessible, en particulier de l'internet, via une liaison radio du téléphone radio mobile (2).

3. Unité de commande selon la revendication 1 ou 2, **caractérisée en ce que** le deuxième jeu de fonctions spécialisées peut être chargé au moyen de la liaison radio à partir d'une base de données externe, en particulier via l'internet.

4. Unité de commande selon l'une des revendications précédentes, **caractérisée en ce qu'**une autre unité de commande est intégrée au téléphone radio mobile (2).

5. Unité de commande selon l'une des revendications 2 à 4, **caractérisée en ce que** le browser présent dans l'unité de commande (1) se présente sous la forme d'un browser WAP.

6. Unité de commande selon la revendication 5, **caractérisée en ce que** le browser utilise les normes WML et/ou WMLscript.

7. Unité de commande selon l'une des revendications précédentes, **caractérisée en ce que** les fonctions standardisées font partie du jeu de commandes standardisé AT+C.

8. Unité de commande selon l'une des revendications précédentes, **caractérisée en ce que** l'unité de commande (1) est montée en tant qu'appareil autonome dans un instrument d'affichage d'un véhicule automobile ou dans le tableau de bord d'un véhicule automobile.

9. Unité de commande selon l'une des revendications précédentes, **caractérisée en ce que** l'unité de commande (1) est intégrée à un autoradio.

10. Unité de commande selon l'une des revendications précédentes, **caractérisée en ce que** l'unité de commande (1) est intégrée à un système de navigation ou à un système multimédia.

11. Unité de commande selon l'une des revendications précédentes, **caractérisée en ce que** l'unité de commande (1) peut être reliée au téléphone radio mobile (2) via une liaison filaire.

12. Unité de commande selon l'une des revendications précédentes, **caractérisée en ce que** l'unité de commande (1) peut être reliée au téléphone radio mobile (2) via une liaison sans fil.

13. Unité de commande selon la revendication 12, **caractérisée en ce que** la liaison entre l'unité de commande (1) et le téléphone radio mobile (2) se produit via une liaison radio courte distance.

14. Unité de commande selon la revendication 13, **caractérisée en ce que** la liaison radio courte distance se produit selon la norme Bluetooth.

15. Procédé de mise à jour de fonctions de commande d'une unité de commande externe pour l'exploitation d'un téléphone radio mobile, un premier jeu de fonctions standardisées qui contient les fonctions servant à établir une liaison de données fixe et à transmettre une caractéristique d'identité du téléphone radio mobile étant stocké dans un module de mémoire associé à l'unité de commande, le procédé comportant les étapes suivantes :
- interroger la caractéristique d'identité du téléphone radio mobile par un module de commande de l'unité de commande ;
- constater, à l'aide de la caractéristique d'identité, si, pour le téléphone radio mobile, un deuxième jeu de fonctions spécialisées du téléphone radio mobile est stocké dans l'unité de commande ;
- si un deuxième jeu de fonctions spécialisées n'est pas stocké pour le téléphone radio mobile :
établissement automatique d'une liaison radio vers une base de données externe au moyen du téléphone radio mobile ;
- transmettre la caractéristique d'identité du téléphone radio mobile à la base de données externe ;
- sélectionner le deuxième jeu de fonctions spécialisées pour le téléphone radio mobile dans la base de données ;
- transmettre le deuxième jeu de fonctions spécialisées à l'unité de commande ;
- stocker le deuxième jeu de fonctions spécialisées dans le module de mémoire associé à l'unité de commande et situé en dehors du téléphone radio mobile.

16. Procédé selon la revendication 15, **caractérisé en ce que** le deuxième jeu de fonctions spécialisées est chargé à partir de la base de données externe via l'internet.

17. Procédé selon la revendication 16, **caractérisé en ce que** la liaison vers l'internet se produit via un programme (browser) apte à tourner dans un module de commande de l'unité de commande pour accéder à des fichiers internet.

18. Procédé selon la revendication 17, **caractérisé en ce que** la liaison vers l'internet se produit via un browser WAP.

19. Procédé selon la revendication 18, **caractérisé en ce que** le browser utilise les normes WML et WMLscript.

20. Procédé selon l'une des revendications précédentes, **caractérisé en ce que** les fonctions standardisées font partie du jeu de commandes AT+C.

21. Procédé selon l'une des revendications précédentes, **caractérisé en ce qu'**il se produit une liaison filaire entre l'unité de commande et le téléphone radio mobile.

22. Procédé selon l'une des revendications précédentes, **caractérisé en ce qu'**il se produit une liaison radio courte distance entre l'unité de commande et le téléphone radio mobile, en particulier selon la norme Bluetooth.
